Europäisches Patentamt

European Patent Office

Office européen des brevets

(19)

(11) Publication number: **0 115 307**
**B1**

(12) # EUROPEAN PATENT SPECIFICATION

(45) Date of publication of patent specification: **21.01.87**

(51) Int. Cl.⁴: **C 09 J 3/00, C 08 J 3/12**

(21) Application number: **84100567.1**

(22) Date of filing: **19.01.84**

(54) **Process for preparing non-blocking hot melt adhesives.**

(30) Priority: **28.01.83 US 461767**

(43) Date of publication of application:
**08.08.84 Bulletin 84/32**

(45) Publication of the grant of the patent:
**21.01.87 Bulletin 87/04**

(84) Designated Contracting States:
**DE FR GB IT NL SE**

(56) References cited:
**DE-A-2 435 410**
**FR-A-2 151 985**
**US-A-3 528 841**
**US-A-3 779 785**

(73) Proprietor: **National Starch and Chemical Corporation**
**Box 6500**
**Bridgewater, N.J. 08807 (US)**

(72) Inventor: **Thaler, Martin D.**
**8 Demond Place**
**Somerville New Jersey 08876 (US)**
Inventor: **Kopicki, Zennon B.**
**438 Ellis Parkway**
**Piscataway New Jersey 08854 (US)**
Inventor: **Puletti, Paul P.**
**Box 201G R.D.**
**Glen Gardner New Jersey 08826 (US)**

(74) Representative: **Hagemann, Heinrich, Dr. et al**
**Patentanwälte GEYER, HAGEMANN & KEHL**
**Postfach 860329**
**D-8000 München 86 (DE)**

EP 0 115 307 B1

Courier Press, Leamington Spa, England.

## Description

This invention relates to hot melt adhesives and more particularly to non-blocking hot melt adhesives and to a process for reducing the tackiness of such solid adhesives in slat form thereby improving their packaging, storage and handling characteristics.

Hot melt adhesives are 100 percent solids thermoplastic materials which are solid at room temperature. Application of heat melts the solid adhesive and brings it to the liquid state. After removal of the heat it sets and forms a bond by simple cooling.

Various polymers and copolymers comprising synthetic resins, rubbers, polyethylene, acrylics, vinyl acetate, ethylene vinyl acetate, and combinations therof, have been proposed and found useful in hot melt adhesive compositions. Frequently, additional components such, for example, as plasticizers, resinous materials known as tackifiers, oils and waxes are added to obtain adhesives having properties and characteristics (viscosity and setting speed) needed for specific end uses.

In their solid state, hot melt adhesives, either as solid masses or thin films, exhibit hard surfaces which may be devoid of substantial tackiness. Some hot melt adhesives are especially formulated with oils to be "pressure-sensitive" and these materials exhibit surfaces which are substantially more tacky and will adhere instantaneously to most solid surfaces with the application · of very slight pressure.

A problem arises with both types of hot melts (more serious with the pressure-sensitive type, however) which is caused by the contiguous surfaces of the hot melt slats as produced and stored to stick to each other. Lengthy storage periods at room temperature or slightly elevated temperatures serve to aggravate the problem.

One means of improving the packaging and handling characteristics of hot melt adhesives relies on the shaping of the hot melt into pillow-like segments. Thus, US—A—4,054,632 describes a method which comprises directing the adhesive in liquid form to form a stream, cooling its outer surface to solidify it and severing the stream of material with the hardened exterior and liquid interior such that the individual segments seal themselves and form individual pillow shaped segments which can then be further cooled to a hardened state and readily handled, packaged, shipped and used. The method provides a pillow-like form of the adhesive without any coating of powder or film.

It is known in the prior art that tackiness of polymer pellets may be decreased by coating the same with polyolefin powders such as polyethylene, polypropylene, etc. It is also known that such coatings are improved when polyolefins in microfine particle size are employed, i.e. average particle size less than 10 microns and substantially devoid of particles greater than 25 microns. See US—A—3,528,841. By use of microfine polyolefin powders, it is stated that smaller amounts of parting agent are necessary to achieve a given reduction in tackiness.

A transfer of this general teaching to coating hot melt adhesive slats results in several difficulties. Using the teachings of the above noted patent, only a weak adherence of the powder to the adhesive surfaces is formed. The resultant coatings, for the most part, are uneven and provide inadequate and spotty protection. Even small areas which are uncoated will stick to other surfaces under usual storage conditions and lead to a build-up of aggregated slats into . large masses which are unsuitable as such when the adhesive is to be melted. Moreover, high molecular weight polyolefins (MW above about 20,000) such as are described in the noted patent are incompatible with many hot melt formulations, depending on the adhesive components. When the coated adhesive slats are used, the polyolefin powders are unavoidably incorporated into the adhesive melt and often cause problems such as separation, phasing, loss of clarity and loss of bonding strength.

It is known from the US—A—3 779 785 a process of wax coating a particulate ethylene-vinyl acetate copolymer which comprises mixing particles of said copolymer containing 28—55 weight percent vinyl acetate with an aqueous emulsion of a finely divided, low melting point hydrocarbon wax, in amounts such that the wax content in the copolymer/emulsion mixture is about 1—5 weight percent based on the mixture. Thereby the particles become coated with the wax. The coated particles are dried. A coated particulate flowable copolymer is recovered. The US—A—3 528 841 describes a method for reducing the tackiness of solid polymer pellets. Pellets are coated with a parting agent consisting essentially of a polyolefin powder having an average particle size less than 10 microns, being substantially devoid of particles in excess of about 25 microns in size and being substantially spherical in shape. The DE—A—2 435 410 refers to a method for reducing the tackiness of permanent hot melt adhesive consisting of contacting the molten polymer (adhesive) with a compatible powder; as a result, the heat given off by the polymer causes the powder to melt and to coat the polymer, whereby however a powder layer further adheres to the coated polymer.

There is thus a need for a process for reducing the tackiness of hot melt adhesive slats and improving their ease of handling, especially a process using coating powders which do not adversely affect the properties of the adhesive.

The present invention provides a process for reducing the tackiness of a hot melt adhesive in slat form, which comprises contacting a stream of hot melt adhesive at a temperature above its melting point with an aqueous dispersion of a polymeric parting agent, whereby said parting agent provides a film-like coating fused on the surfaces of said adhesive, characterized in that said parting agent is a polymeric powder having an average particle size less than about 20 microns and substantially free of particles greater than 30 microns and is selected from the group consisting of polyethylene, polypropylene, copolymers thereof and waxes, having a molecular weight of from 800 to 5,000 and a melting point in the range of 65 to 140°C.

The parting agents useful herein are polymeric powders consisting of polyethylene and polypropylene, copolymers thereof such as ethylene vinyl acetate copolymers having a vinyl acetate content less than about 18%, and waxes. All of the parting agents will have a molecular weight of from 800 to 5,000, preferably less than about 2,000, and a melting point in the range of 65 to 140°C. In carrying out the process herein, an aqueous dispersion of polymeric powder is contacted with a stream of hot, semi-solid adhesive as it is extruded or formed on leaving the slat former feed. The hot melt adhesives used herein become liquid and are employed in forming the adhesive stream at temperatures which range from 60 to 150°C. The adhesive furnishes sufficient heat to the polymeric powder to provide a substantially fused and film-like coating of parting agent on the adhesive slat. While some embedding of the powdered particles may take place, employing the adhesive significantly above the melting point of the parting agent will tend to increase fusing and provide a coating fused on the adhesive surfaces.

It is necessary that the polymeric powders used as a parting agent herein have an average particle size less than about 20 microns and be substantially free of particles greater than 30 microns. Use of powders having larger particle sizes causes problems in fusing. Methods for preparing polyolefin powders in fine particle size are known, see, for example, US—A—3,422,049. Polymeric powders useful herein are also available commercially as, for example, Polymist® B-12, a high density, low molecular weight polyethylene supplied by Allied Corporation, Morristown, N.J. Also useful are Polywax® 1000, a high density, low molecular weight polyethylene supplied by the Bareco Division of Petrolite Corporation, Tulsa, OK and Paraflint® HIN3, a powdered Fischer-Tropsch wax supplied by Sasol, S.A. All of the mentioned commercial products have a molecular weight of about one thousand.

The molecular weight, the melting or softening point of the selected parting agent and the particle size are of significant importance in the present process. The temperature of the adhesive as it leaves the streamforming nozzle or opening is above its melting point. When the powdered particles and adhesive are contacted, the residual heat in the adhesive serves to melt or fuse the powdered particles of the parting agent. The improved coatings herein are possible because the powder particles contacted with the hot adhesive not only fuse to the adhesive surface but also fuse themselves to form a filmlike coating. In an optimal embodiment of the process, the applied parting agent, in substance, forms a protective envelope for the adhesive slat. Embodiments herein which are less than optimal also provide effective and useful coatings.

Ordinarily, the concentration of parting agent in the aqueous dispersion used to coat the adhesive slat will range from 5 to 60% by weight, with the preferred range being from 15 to 40% by weight. In preparing the dispersion, the dispersibility of the parting agent is typically improved on the addition of a surfactant which may be nonionic, anionic or cationic. Typical surfactants useful herein include Igepal® CO-430, Triton® X-45, Polystep B-5, Carsoquat® CT429 and Calsoft® L40, which are used in concentrations of 0.01 to 0.2% by weight of the dispersion. Nonionic surfactants are most useful when preparing dispersions at higher levels of parting agent. Use of a surfactant is not necessary at lower levels of parting agent but the dispersion must be maintained under good agitation.

With respect to useful hot melt adhesives, these can be any of such adhesives known in the art. Examples of representative adhesives include those which contain or are based on:

(a) polyolefins such as polyethylene and polypropylene and mixtures thereof in the molecular weight range of from 1,500 to 500,000;

(b) amorphous polypropylenes;

(c) isotactic polybutylene resins, see US—A—3,573,240;

(d) polyamide resins having a softening point of from 90 to 125°C;

(e) polyvinyl acetate and random copolymers thereof containing at least about 40% of vinyl acetate;

(f) block copolymers of monovinyl aromatic hydrocarbons and conjugated dienes such as styrene-butadiene and styrene-butadiene-styrene resins;

(g) block copolymers of monovinyl aromatic hydrocarbons and mono-olefins such as styrene-ethylene and styrene-butylene resins; and

(h) copolymers of ethylene such as ethylene-vinyl acetate which ordinarily contains from 4 to 16 moles of ethylene per mole of vinyl acetate and ethylene-ethyl acrylate.

Most often such adhesives are formulated with so called tackifying resins in order to improve the adhesion and introduce tack into the adhesive. Such resins include (a) natural and modified rosins, (b) polyterpene resins, (c) phenolic modified terpene resins, (d) coumarone-indene resins, (e) aliphatic and aromatic petroleum hydrocarbon resins, and (f) phthlate esters.

As desirable optional ingredients, the adhesives will include wax diluents, for example, liquid polybutene or polypropylene having a low molecular weight in the range of 700 to 1,200; petroleum waxes such as paraffin and microcrystalline waxes; polyethylene greases having a molecular weight of less than 1,000; hydrogenated animal, fish and vegetable fats, mineral oil and synthetic waxes such as Fischer-Tropsch wax. In some instances, an essentially hydrocarbon oil is required in the formulation, typically called naphthenic or paraffinic process oils.

Other optional additives may include stabilizers and antioxidants such as high molecular weight hindered phenols and substituted phosphites; colorants such as titanium dioxide and watchung red, and fillers such as talc and clay, etc.

The selection of components and preparation of hot melt adhesives is known in the art and well described in the literature.

The invention will become apparent and be better understood from a consideration of the drawings wherein,

FIG. 1 shows a hot melt adhesive stream being contacted with an aqueous dispersion of a parting agent, which stream is then cooled by an overhead spray of water. The adhesive slat stream is subsequently cut into discrete pieces and the pieces are collected in a container.

FIG. 2 is similar to FIG. 1 except that the hot melt adhesive stream is contacted with the dispersion of the parting agent in a slightly different manner and the stream is thereafter cooled in a chilled water bath. The adhering water is removed using an air knife.

Both figures illustrate different means for carrying out the present process.

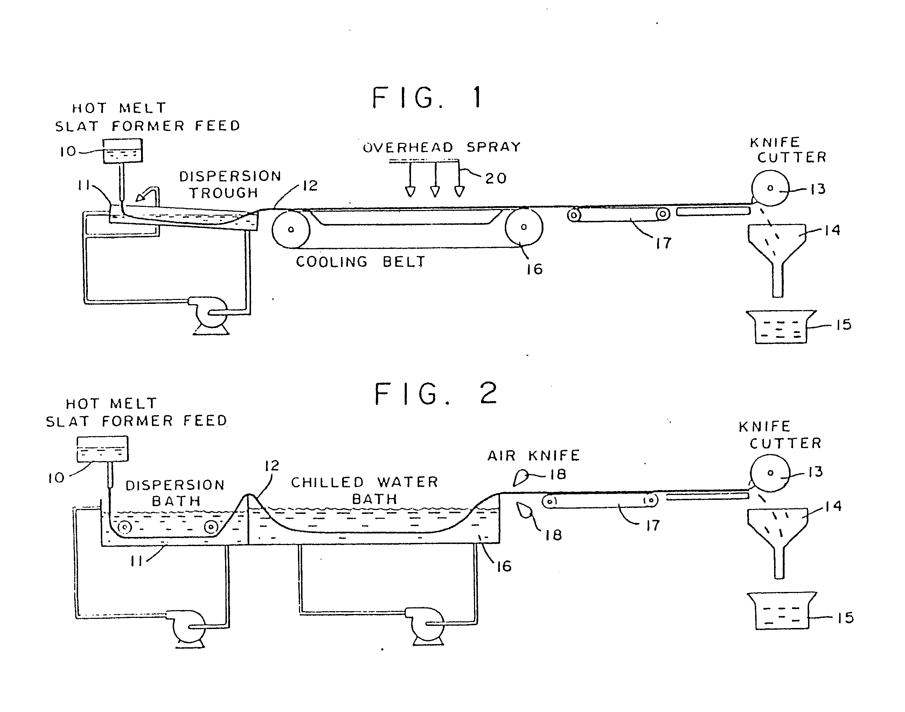

Referring more particularly to FIG. 1, molten hot melt adhesive in the hot melt slat former feed 10 is extruded or fed through an orifice to form a stream which is directed through a trough containing an aqueous dispersion of a parting agent 11. To aid in submerging the adhesive stream and to insure a complete coating, a stream of the aqueous dispersion is directed at the adhesive stream immediately prior to its being submerged in the dispersion. On leaving the dispersion trough, the adhesive stream is directed onto a cooling belt 16 and conveyor belt 17. The adhesive stream is cooled by an overhead water spray 20 and moved forward to a knife cutter 13 used to cut the stream into discrete pieces (slats) which ordinarily will measure from about 2.54 to 5.08 cm (1 to 2 inches) in length. The cut pieces are collected in a suitable container 15 for shipping or storage.

It is noted that a pump is used in connection with the dispersion trough to circulate and, if necessary, control the temperature of the aqueous dispersion. The speed of forming the hot melt adhesive stream and of the cooling belt carrying the coated adhesive stream must be coordinated and may be varied within narrow limits, but is largely determined by a variety of factors including the temperature of the molten adhesive, the melting or softening point of the parting agent and the capability of the cooling means. In a pilot plant operation, speeds of about 10 to 40 feet per minute have been achieved.

In FIG. 2 molten hot melt adhesive is likewise fed through an orifice to form an adhesive stream. The stream is thereafter directed into a dispersion bath 11 containing an aqueous dispersion of a parting substance. The design of the bath container differs slightly from the trough shown in FIG. 1 but the container performs the same function. On leaving the dispersion bath the adhesive stream is directed through a chilled water bath 12 and an air knife 18 is used to remove water adhering to the surfaces of the slat stream. The cooled slat stream is then directed onto a conveyor belt 17 and moved forward to a knife cutter 13 used to cut the adhesive in suitable pieces as in FIG. 1. The cut pieces are collected in a container 15 for shipping or storage of the coated hot melt adhesive.

It is noted that the process illustrated in FIG. 2 makes use of a pump to circulate the aqueous dispersion of parting agent and another pump to circulate and cool the chilled water bath.

In commercial applications of the present process, multiple streams of the adhesive can be formed and carried through the process at one time.

In prior art processes for preparing slats of hot melt adhesives, where the process involves the transport of an adhesive stream on a cooling belt, there is often a strong tendency for some hot melt formulations to stick to the cooling (conveyor) belt. This sticking causes understandable difficulties at the point where the adhesive stream is to leave the belt and, in some instances, some tacky adhesives cannot be run on a cooling belt. At times, a remedy is provided by slowing the belt speed resulting in a reduction of the manufacturing rate. At other times, a cleaning operation is necessary. It is a distinct advantage of the present process that the coated adhesive stream has no tendency to stick to the cooling belt which has effectively eliminated this problem. A further beneficial effect provided by the coated adhesive is found in the lubrication of the knives used in cutting the adhesive slats which has tended to eliminate problems related to the cutting operation.

In the examples which follow, all parts and percentages are given by weight and all temperatures are in degrees Celsius unless otherwise noted.

### Example I

In this example, a dispersion of a parting agent typical of parting agents useful herein was prepared by adding 3,800 g of Polymist® B-12 to 9,000 g of water with stirring. About 30 g of Triton® X-45 surfactant was added during the stirring to improve dispersibility. The aqueous dispersion was then placed in the dispersion trough as in FIG. 1 and the pump was engaged to circulate the dispersion.

Hot melt adhesive having a melting point of about 65°C based on a block copolymer of styrene-butadiene-styrene was heated to liquid form in the hot melt adhesive slat former feed. In starting the process, molten adhesive was fed through an opening in the slat former feed to form a stream which was directed through a dispersion trough and onto a moving cooling belt. A flow of parting agent dispersion was directed onto the adhesive stream just prior to its entering the dispersion trough to ensure complete coating of the adhesive. An overhead spray of water at a temperature of about 10°C (50°F) was directed onto the adhesive stream on the cooling belt and served to cool and further solidify the adhesive slat. The slat stream was thereafter guided onto a conveyor belt and a knife cutter device was used to cut the slat stream into uniform lengths of about one and one-half inches. The pieces were collected in a suitable container.

The coated surfaces of the adhesive possessed a non-tacky feel even when moderate finger pressure was applied. Examination of several representative pieces of the coated adhesive under a microscope showed a thin but substantially continuous film-like coating. Adhesive slats in containers filled about 20.32 cm (8 inches) in height showed no blocking after two months of storage at room temperature. Slats of the identical hot melt adhesive but without a coating filled in similar containers blocked and formed large aggregates after one month of storage at room temperature and in some cases formed one large mass. On remelting of the coated adhesive slats, the molten adhesive showed no separation, phasing or loss of clarity.

### Example II

The procedure of Example I was repeated employing an aqueous dispersion (20% by weight) of Paraflint® HIN3 in place of the parting agent used in the earlier example.

The resultant coated slats possessed only a minimum of tackiness and were observed to be acceptable.

### Example III

In this example an aqueous dispersion of Polymist® B-12 was prepared at 18% solids. The dispersion was placed in the dispersion bath container as shown in FIG. 2 and the pump was employed to circulate the dispersion.

Hot melt adhesive based on a blend of amorphous polypropylene and ethylene ethyl acrylate was heated to liquid form in the hot melt adhesive slat former feed. Extrusion of the molten adhesive (temperature of 138°C) was started and the adhesive stream was directed through the dispersion bath and into and through a chilled water bath. On leaving the water bath, the stream was directed onto a conveyor belt and a rotary knife cutter was used to cut the stream into uniform lengths of about one and one-half inches. The slats measured about 0.32 to 0.95 cm (one-eighth to three-eighths inches) in thickness but there was some variation throughout the run. The slats were collected in a container.

The surfaces of the coated slats showed a film-like coating and were non-tacky under moderate finger pressure. Adhesive slats in containers filled about 20.3 cm (8 inches) in height showed no blocking after one month of storage at room temperature. On remelting of the coated slats, the molten adhesive showed no separation, phasing, or loss of clarity.

### Example IV Comparative

In this example, a polyolefin parting agent having a molecular weight outside of range specified herein was used in the process but did not provide an acceptable coating.

The procedure of Example I was repeated using an aqueous dispersion (20% by weight) of Microthene® FE 532 (U.S. Industrial Chemicals Co.), an ethylene vinyl acetate copolymer with a vinyl acetate content of 8—9% and a molecular weight of about 8,000.

While a coating on the resultant adhesive slats was visible, the coated surfaces possessed a tacky feel when moderate finger pressure was applied. The coated slats filled in containers about 20.3 cm (8 inches) high blocked after one month at room temperature. Moreover, after remelting the coated adhesive, phasing was noted indicating incompatibility of the Microthene® FE 532 with the adhesive.

While the non-blocking property of the adhesive might be improved by increasing the amount of parting agent applied and thereby increasing the thickness of the coating, the relatively high molecular weight of the parting agent when used at such higher levels results in increased compatibility problems. Thus, when the coated adhesive is remelted for use the polymeric parting agent separates from the adhesive and, acting as a contaminent, interferes with the adhesive bond formation.

In summary, a process for the preparation of non-blocking hot melt adhesives having improved packaging, storage and handling characteristics is provided.

### Claims

1. A process for reducing the tackiness of a hot melt adhesive in slat form, which comprises contacting a stream of hot melt adhesive at a temperature above its melting point with an aqueous dispersion of a polymeric parting agent, whereby said parting agent provides a film-like coating which is substantially fused on the surfaces of said adhesive, characterized in that said parting agent is a polymeric powder having an average particle size less than about 20 microns and substantially free of particles greater than 30 microns and is selected from the group consisting of polyethylene, polypropylene, copolymers thereof and waxes, having a molecular weight of from 800 to 5,000 and a melting point in the range of 65 to 140°C.

2. The process of Claim 1, characterized in that the parting agent has a molecular weight of less than 2,000.

3. The process of Claim 1, characterized in that the parting agent is a wax.

4. The process of Claim 1, characterized in that the parting agent is polyethylene or an ethylene-vinyl acetate copolymer.

### Patentansprüche

1. Verfahren zur Verminderung der Klebrigkeit eines streifenförmigen Schmelzklebers, wobei ein Strom eines Schmelzklebers bei einer Temperatur oberhalb seines Schmelzpunktes mit einer wäßrigen Dispersion eines polymeren Trennmittels in Kontakt gebracht wird, wodurch das Trennmittel eine filmartige Beschichtung liefert, die auf den Oberflächen des Klebers im wesentlichen verschmolzen ist, dadurch gekennzeichnet, daß das Trennmittel ein polymeres Pulver einer durchschnittlichen Teilchengröße von weniger als etwa 20 Mikrometer und im wesentlichen frei von Teilchen größer als 30 Mikrometer ist und aus der aus Polyethylen, Polypropylen, Copolymeren davon und Wachsen eines Molekulargewichts von 800 bis 5.000 und eines Schmelzpunktes von 65 bis 140°C bestehenden Gruppe ausgewählt worden ist.

2. Verfahren nach Anspruch 1, dadurch gekennzeichnet, daß das Trennmittel ein Molekulargewicht von weniger als 2.000 aufweist.

3. Verfahren nach Anspruch 1, dadurch gekennzeichnet, daß das Trennmittel ein Wachs ist.

4. Verfahren nach Anspruch 1, dadurch gekennzeichnet, daß das Trennmittel Polyethylen oder ein Ethylen-Vinylacetat-Copolymer ist.

**Revendications**

1. Procédé pour réduire l'adhésivité d'un adhésif thermofusible en forme de rubans, comprenant l'étape consistant à mettre en contact un courant d'adhésif thermofusible, à une température supérieure à son point de fusion, avec une dispersion aqueuse d'un agent de séparation polymère, de telle façon que ledit agent de séparation forme un revêtement pelliculaire pratiquement soudé par fusion sur les surfaces dudit adhésif, caractérisé en ce que ledit agent de séparation est une poudre polymère ayant une dimension granulométrique moyenne inférieure à environ 20 microns et pratiquement dépourvue de particules dépassant 30 microns, et en ce qu'il est choisi dans le groupe comprenant le polyéthylène, le polypropylène, leurs copolymères et des cires, d'un poids moléculaire de 800 à 5 000 et d'un point de fusion compris entre 65 et 140°C.

2. Procédé selon la revendication 1, caractérisé en ce que l'agent de séparation a un poids moléculaire inférieur à 2 000.

3. Procédé selon la revendication 1, caractérisé en ce que l'agent de séparation est une cire.

4. Procédé selon la revendication 1, caractérisé en ce que l'agent de séparation est le polyéthylène ou un copolymère éthylène-acétate de vinyle.

# FIG. 1

HOT MELT
SLAT FORMER FEED

10

11

12

DISPERSION TROUGH

OVERHEAD SPRAY

20

COOLING BELT

16

17

KNIFE CUTTER

13

14

15

# FIG. 2

HOT MELT
SLAT FORMER FEED

10

11

12

DISPERSION BATH

CHILLED WATER BATH

16

AIR KNIFE

18

18

17

KNIFE CUTTER

13

14

15